# EUROPEAN PATENT APPLICATION

(11) **EP 4 647 173 A1**
(43) Date of publication of application: **12.11.2025**
(21) Application number: 24215135.5
(22) Date of filing: 25.11.2024
(51) Int. Cl.: B03C 5/00, B03C 5/02

(54) **PARTICLE ACCOMMODATING DEVICE, PARTICLE CONTACTLESS PROCESSING APPARATUS, AND LIGHT SENSING STRUCTURE OF PARTICLE ACCOMMODATING DEVICE**

(30) Priority: 07.05.2024 US 202463643905 P
(71) Applicant: Cytoaurora Biotechnologies, Inc., Zhubei City, Hsinchu County (TW)
(72) Inventor: HUANG, Chung-Er, Zhubei City (TW); HO, Hsin-Cheng, Zhubei City (TW); HUANG, Yen-Sen, Zhubei City (TW); HUANG, Yun-Yen, Zhubei City (TW)
(74) Representative: Viering, Jentschura & Partner mbB Patent- und Rechtsanwälte

(57) **Abstract**

A particle accommodating device (1) is configured to accommodate a liquid specimen (S) having a plurality of particles (P) therein. The particle accommodating device (1) includes a light sensing structure (11) and a mating structure (12) spaced apart from the light sensing structure (11). The light sensing structure (11) includes a substrate, an electrode layer formed on the substrate, a photoelectric layer (113) formed on the substrate, and an insulating body (114) that is formed on the photoelectric layer (113). The insulating body (114) includes a charge track (T). The photoelectric layer (113) is operable to generate charges concentrated on the charge track (T), such that a density of the charges concentrated on the charge track (T) is greater than a density of the charges on an outer surface of the photoelectric layer (113) for enabling at least one of the particles (P) to be moved and held onto the charge track (T) through electrostatic adsorption.

## Description

### FIELD OF THE INVENTION

The present invention relates to a particle processing device, and more particularly to a particle accommodating device, a particle contactless processing apparatus, and a light sensing structure of a particle accommodating device.

### BACKGROUND OF THE INVENTION

A conventional particle processing device can be operated by applying an electric field for moving a target particle. However, the conventional particle processing device needs to be further improved in terms of how the target particle can be accurately moved to a predetermined target region along a predetermined path without the target particle coming in contact with an external environment.

### SUMMARY OF THE INVENTION

In response to the above-referenced technical inadequacies, the present invention provides a particle accommodating device, a particle contactless processing apparatus, and a light sensing structure of a particle accommodating device for effectively improving on the issues associated with conventional particle processing devices.

In order to solve the above-mentioned problems, one of the technical aspects adopted by the present invention is to provide a particle contactless processing apparatus, which includes a particle accommodating device and a light driving device. The particle accommodating device is configured to receive a liquid specimen having a plurality of particles therein. The particle accommodating device includes a light sensing structure and a mating structure. The light sensing structure includes a first substrate, a first electrode layer formed on the first substrate, a photoelectric layer formed on the first substrate, and an insulating body that is formed on the photoelectric layer. The insulating body includes a base layer and a track layer. The base layer is embedded in the photoelectric layer. The track layer is connected to the base layer and at least partially protrudes from the photoelectric layer. The track layer has a charge track arranged on a top side thereof. The photoelectric layer is operable to generate a plurality of charges concentrated on the charge track for enabling at least one of the particles to be moved and held onto the charge track in an electrostatic adsorption manner. The at least one of the particles is defined as a target particle. The mating structure is spaced apart from the light sensing structure. At least one of the mating structure and the light sensing structure is transparent, and the mating structure includes a second substrate and a second electrode layer that is formed on the second substrate and that faces toward the light sensing structure. The light driving device faces toward the particle accommodating device. The light driving device is configured to drive the light sensing structure to form a dielectrophoresis (DEP) pattern by emitting light onto the light sensing structure. When the target particle is held on the charge track in the electrostatic adsorption manner, the light driving device is configured to push the target particle to move along the charge track by moving the DEP pattern.

In order to solve the above-mentioned problems, another one of the technical aspects adopted by the present invention is to provide a particle accommodating device configured to receive a liquid specimen having a plurality of particles therein. The particle accommodating device includes a light sensing structure and a mating structure. The light sensing structure includes a first substrate, a first electrode layer formed on the first substrate, a photoelectric layer formed on the first substrate, and an insulating body that is formed on the photoelectric layer and that includes a charge track protruding from the photoelectric layer. The photoelectric layer is operable to generate a plurality of charges concentrated on the charge track, so that a density of the charges on the charge track is greater than a density of the charges on an outer surface of the photoelectric layer for enabling at least one of the particles to be moved and held onto the charge track in an electrostatic adsorption manner. The mating structure is spaced apart from the light sensing structure. At least one of the mating structure and the light sensing structure is transparent, and the mating structure includes a second substrate and a second electrode layer that is formed on the second substrate and that faces toward the light sensing structure.

In order to solve the above-mentioned problems, yet another one of the technical aspects adopted by the present invention is to provide a light sensing structure of a particle accommodating device. The light sensing structure includes a first substrate, a first electrode layer formed on the first substrate, a photoelectric layer formed on the first substrate, and an insulating body formed on the photoelectric layer and including a charge track that protrudes from the photoelectric layer. The photoelectric layer is operable to generate a plurality of charges concentrated on the charge track, so that a density of the charges on the charge track is greater than a density of the charges on an outer surface of the photoelectric layer.

Therefore, any one of the particle accommodating device, the particle contactless processing apparatus, and the light sensing structure in the present invention is provided with the insulating body formed on the photoelectric layer, such that the charge track of the insulating body can be cooperated with the operation of the photoelectric layer for enabling the target particle to be moved and held onto the charge track in an electrostatic adsorption manner, thereby accurately achieving the positioning of the target particle.

Specifically, the charge track in the present invention is cooperated with the light driving device, so that the target particle can be pushed by the DEP pattern for being quickly moved along the charge track. In other words, the target particle can be moved along the charge track by being continuously pushed or being touched or nudged from the DEP pattern, thereby effectively preventing the target particle from being damaged by a photomask.

These and other aspects of the present invention will become apparent from the following description of the embodiment taken in conjunction with the following drawings and their captions, although variations and modifications therein may be affected without departing from the scope of the novel concepts of the invention.

### BRIEF DESCRIPTION OF THE DRAWINGS

The described embodiments may be better understood by reference to the following description and the accompanying drawings, in which:
FIG. 1 is a schematic perspective view of a particle contactless processing apparatus according to a first embodiment of the present invention;
FIG. 2 is a schematic cross-sectional view of the particle contactless processing apparatus according to the first embodiment of the present invention;
FIG. 3 is a schematic top view of the particle contactless processing apparatus according to the first embodiment of the present invention;
FIG. 4 is a schematic enlarged view of part IV of FIG. 3;
FIG. 5 is a schematic enlarged view showing a target particle of FIG. 4 being moved in a first manner;
FIG. 6 is a schematic enlarged view showing the target particle of FIG. 4 being moved in a second manner;
FIG. 7 is a partial schematic cross-sectional view of the particle contactless processing apparatus according to the first embodiment of the present invention;
FIG. 8 is a partial schematic cross-sectional view showing the target particle of FIG. 7 being moved;
FIG. 9 is a partial schematic cross-sectional view of the particle contactless processing apparatus according to a second embodiment of the present invention; and
FIG. 10 is a schematic cross-sectional view of the particle contactless processing apparatus according to a third embodiment of the present invention.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

### [First Embodiment]

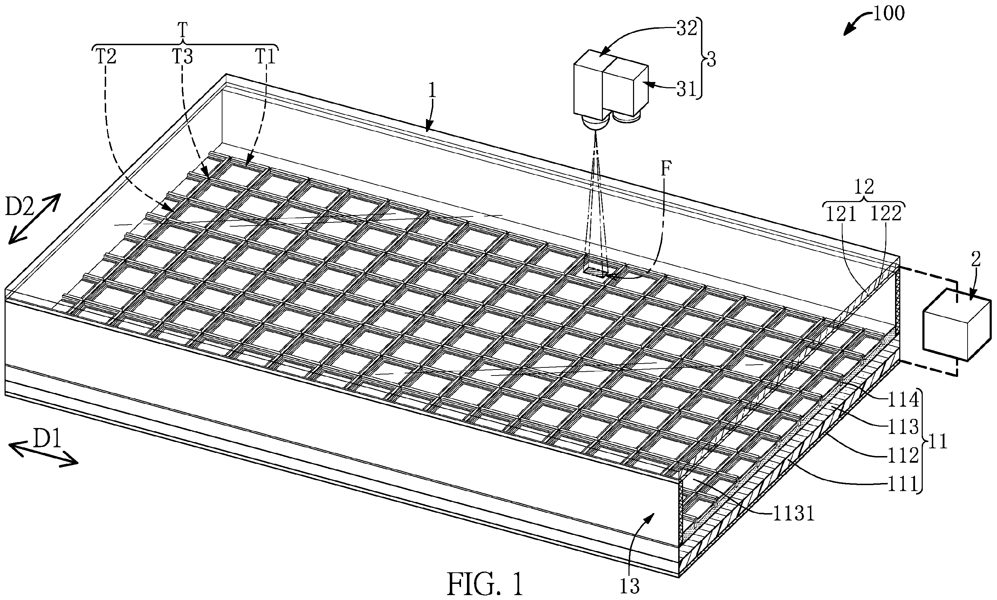

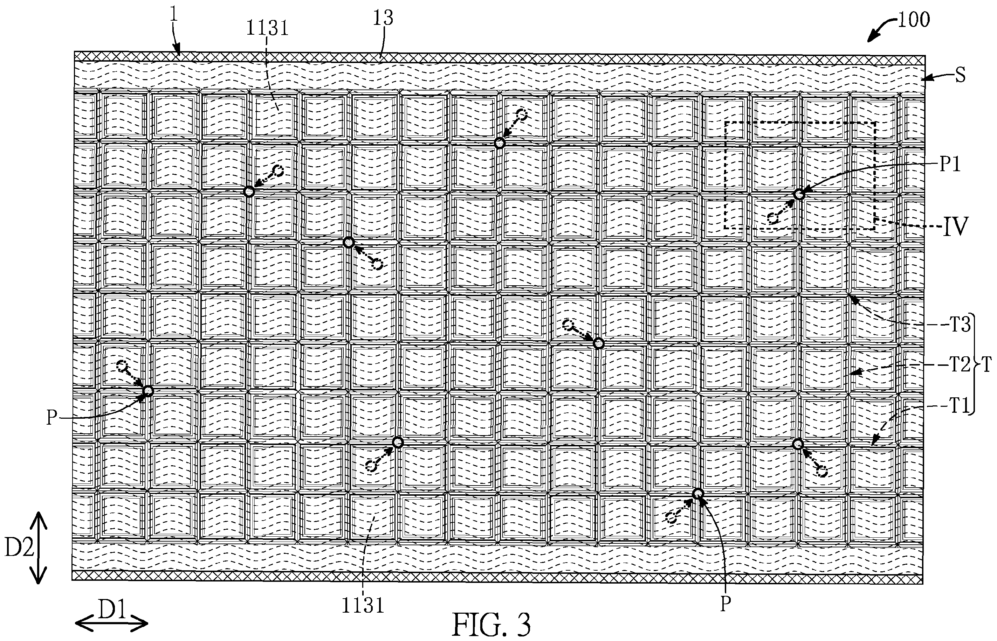

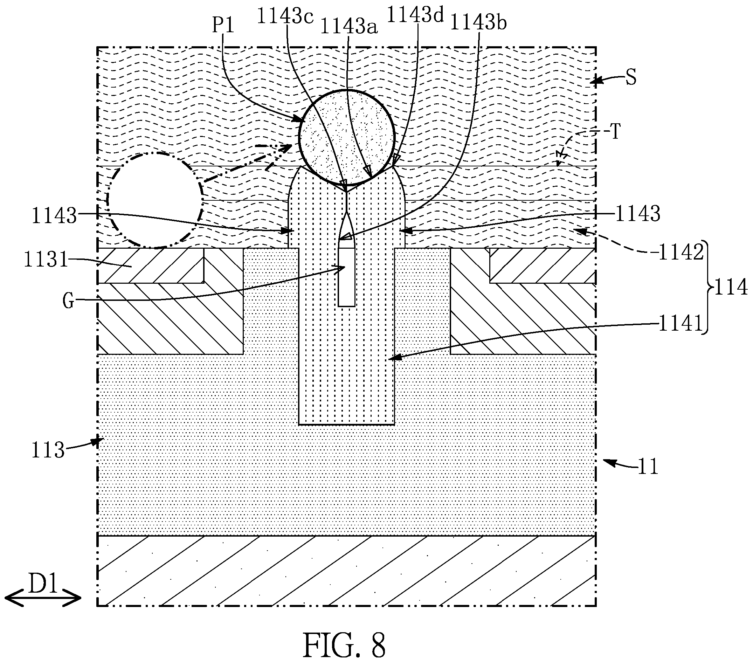

Referring to FIG. 1 to FIG. 8, a first embodiment of the present invention is provided. As shown in FIG. 1 to FIG. 4, the present embodiment provides a particle contactless processing apparatus 100, which includes a particle accommodating device 1, an alternating current (AC) power device 2 electrically coupled to the particle accommodating device 1, and a light driving device 3 that faces toward the particle accommodating device 1, but the present invention is not limited thereto. For example, in other embodiments of the present invention not shown in the drawings, the particle accommodating device 1 can be independently used (e.g., sold) or can be used in cooperation with other devices according to practical requirements.

The accommodating device 1 in the present embodiment is formed at a chip-scale and is a rectangular structure, and the accommodating device 1 is provided for receiving a liquid specimen S that has a plurality of particles P therein, but the present invention is not limited thereto. For example, a quantity of the particles P in the liquid specimen S can be adjusted (e.g., at least one) according to practical requirements.

Moreover, the particles P in the present embodiments are bioparticles. Specifically, the liquid specimen S can be a body fluid from an animal (e.g., blood, lymph, saliva, or urine), and the particle P can be a specific type of cell or cell clusters, such as circulating tumor cells (CTCs), fetal nucleated red blood cells (FNRBCs), or bacteria, but the present invention is not limited thereto. For example, in other embodiments of the present invention not shown in the drawings, the liquid specimen S can also be obtained from plants; or, the particles P can be plastic particles for attracting virus, bacteria, or exosome according to practical requirements.

The particle accommodating device 1 includes a light sensing structure 11, a mating structure 12 spaced apart from the light sensing structure 11, and a bonding layer 13 that connects a peripheral portion of the light sensing structure 11 and a peripheral portion of the mating structure 12. At least one of the mating structure 12 and the light sensing structure 11 is transparent. The light sensing structure 11 and the mating structure 12 in the present embodiment are flat structures parallel to each other and are spaced apart from each other by a distance that is greater than a size of any one of the particles P, but the present invention is not limited thereto.

Specifically, the light sensing structure 11 includes a first substrate 111, a first electrode layer 112 formed on the first substrate 111, a photoelectric layer 113 formed on the first substrate 111, and an insulating body 114 that is formed on the photoelectric layer 113. In the present embodiment, the first electrode layer 112 is formed on a bottom side of the first substrate 111, the photoelectric layer 113 is formed on a top side of the first substrate 111, and the photoelectric layer 113 has a plurality of transistors 1131 being in a matrix arrangement. The photoelectric layer 113 can have a NPN transistor configuration, a PNP transistor configuration, a NP transistor configuration, or a PN transistor configuration according to practical requirements, but the present invention is not limited thereto.

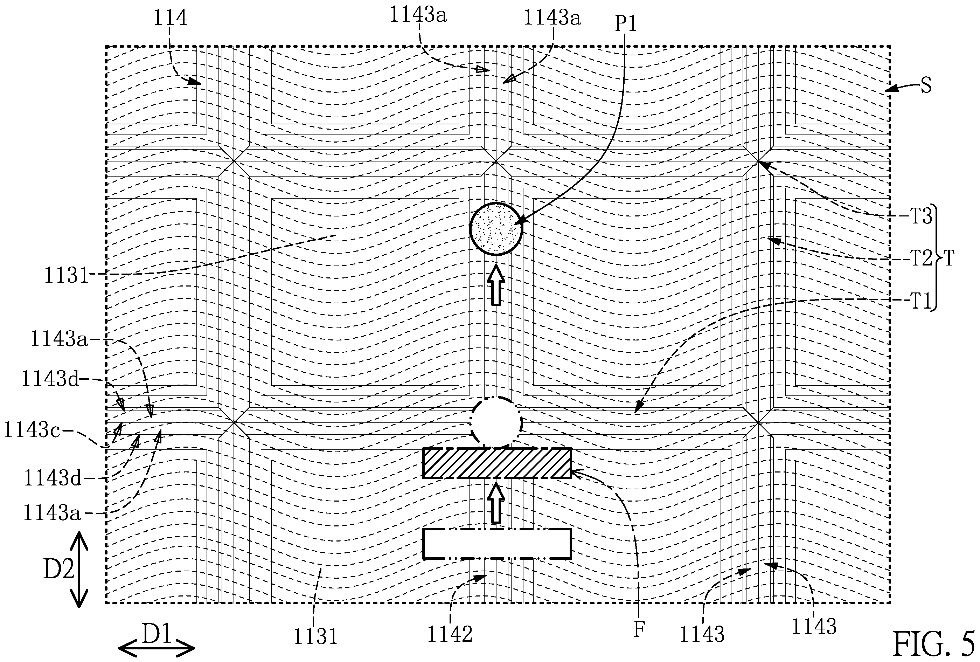

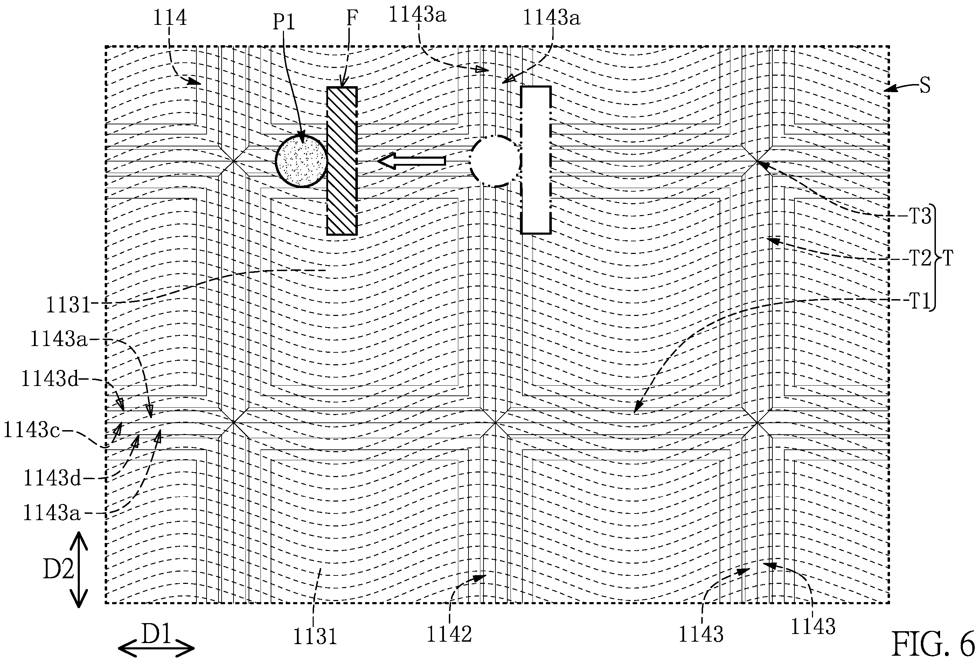

The mating structure 12 includes a second substrate 121 and a second electrode layer 122 that is formed on the second substrate 121 and that faces toward the light sensing structure 11 (e.g., the photoelectric layer 113 and the insulating body 114). In the present embodiment, the AC power device 2 is electrically coupled to the first electrode layer 112 of the light sensing structure 11 and the second electrode layer 122 of the mating structure 12, such that the light sensing structure 11 can be irradiated by light emitted from the light driving device 3 for forming a dielectrophoresis (DEP) pattern F that is capable of moving any one of the particles P in the liquid specimen S (as shown in FIG. 5 and FIG. 6).

For example, the light driving device 3 includes a camera 31 and a light source 32 that is in cooperation with the camera 31. The light sensing structure 11 (or the photoelectric layer 113) can be irradiated by light emitted from the light source 32 of the light driving device 3 for forming the DEP pattern F.

The insulating body 114 includes a charge track T protruding from the photoelectric layer 113. The photoelectric layer 113 is operable to generate a plurality of charges concentrated on the charge track T, so that a density of the charges on the charge track T is greater than a density of the charges on an outer surface of the photoelectric layer 113 for enabling at least one of the particles P to be moved and held onto the charge track T in an electrostatic adsorption manner. Moreover, the at least one of the particles P is defined as a target particle P1.

The photoelectric layer 113 is configured to receive light from an external environment for generating charges on the charge track T; or, the photoelectric layer 113 can be configured to receive light from the light driving device 3 for generating charges on the charge track T, but the present invention is not limited thereto.

In summary, when the target particle P1 is held on the charge track T in the electrostatic adsorption manner, the light driving device 3 is configured to push the target particle P1 to move along the charge track T by moving the DEP pattern F (as shown in FIG. 5 and FIG. 6).

Accordingly, the particle contactless processing apparatus 100 in the present embodiment is provided with the insulating body 114 formed on the photoelectric layer 113, such that the charge track T of the insulating body 114 can be cooperated with the operation of the photoelectric layer 113 for enabling the target particle P1 to be moved and held onto the charge track T in an electrostatic adsorption manner, thereby accurately achieving the positioning of the target particle P1.

Specifically, the charge track T in the present embodiment is cooperated with the light driving device 3, so that the target particle P1 can be pushed by the DEP pattern F for being quickly moved along the charge track T. In other words, the target particle P1 can be moved along the charge track T by being continuously pushed (as shown in FIG. 6) or being touched or nudged (as shown in FIG. 5) from the DEP pattern F, thereby effectively preventing the target particle P1 from being damaged by a photomask.

It should be noted that under the premise of the charge track T being capable of attracting the target particle P1 or further allowing the target particle P1 to move thereon, the structure of the insulating body 114 can be adjusted or changed according to practical requirements. In order to enable the target particle P1 to more smoothly and quickly move along the charge track T, the insulating body 114 preferably includes at least part of the following features, but the present invention is not limited thereto.

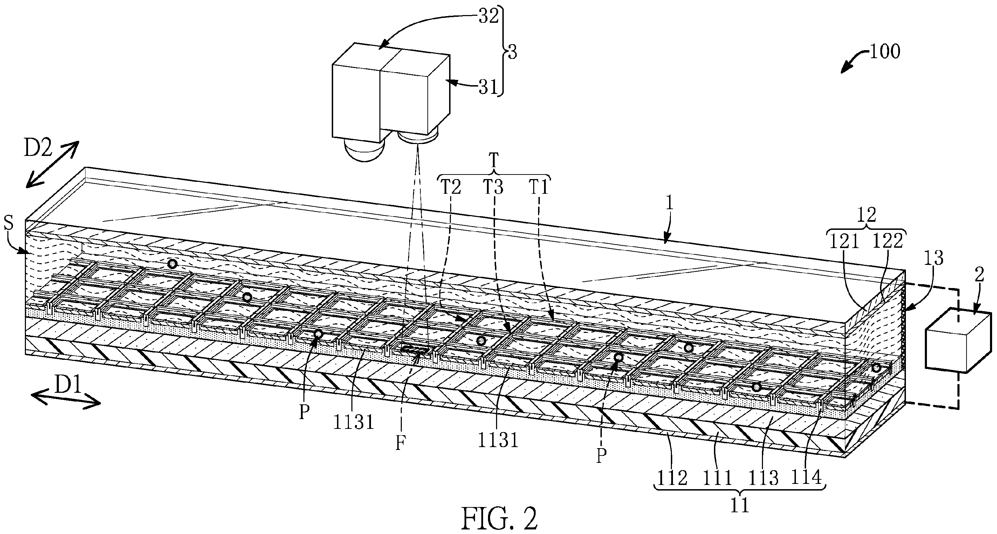

As shown in FIG. 2, FIG. 7, and FIG. 8 of the present embodiment, the insulating body 114 includes a base layer 1141 and a track layer 1142. The base layer 1141 is embedded in the photoelectric layer 113, the track layer 1142 is connected to the base layer 1141 and at least partially protrudes from the photoelectric layer 113, and the track layer 1142 has a charge track T arranged on a top side thereof. It should be noted that the following description describes the structure of the insulating body 114 from different viewing angles (e.g., a cross-sectional view angle or a top view angle), and the structure of the insulating body 114 can be formed from a specifically-designed angle according to practical requirements.

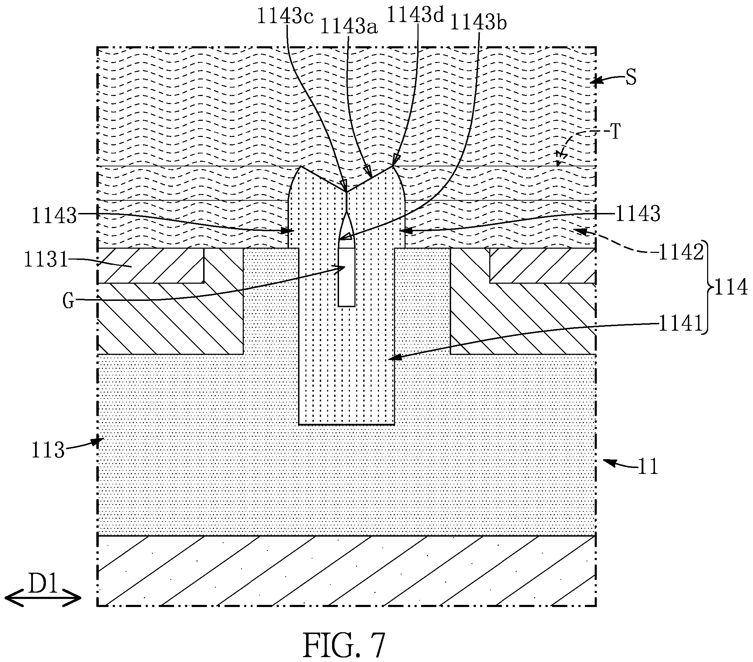

More specifically, the insulating body 114 shown in FIG. 2 includes a plurality of cross-sectional segments having substantially the same structures, and in order to clearly describe the present embodiment, the following description only describes one of the cross-sectional segments shown in FIG. 7, but the present invention is not limited thereto. For example, in other embodiments of the present invention not shown in the drawings, the cross-sectional segments of the insulating body 114 can be of different structures.

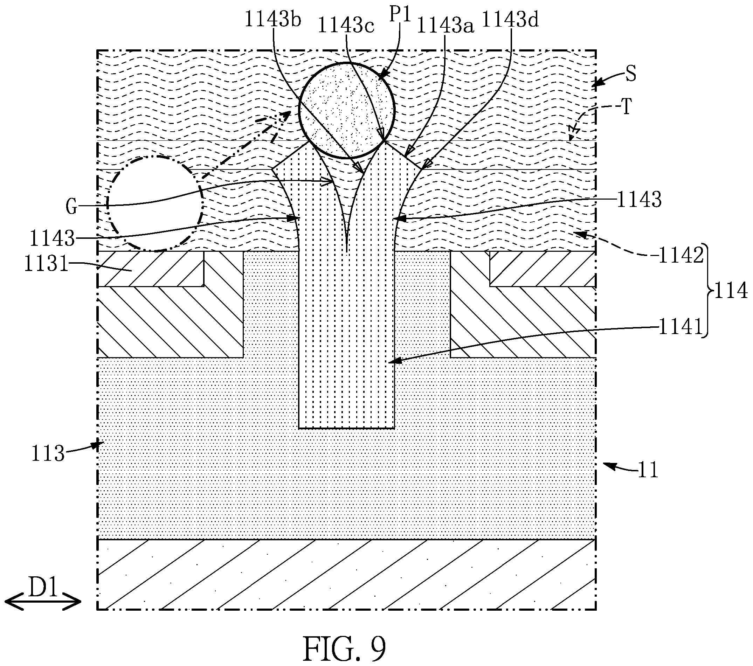

As shown in FIG. 7 and FIG. 9 of the present embodiment, the track layer 1142 includes two arms 1143 that extend from the base layer 1141 and that have a gap G between inside surfaces 1143b thereof. Moreover, free end surfaces 1143a of the two arms 1143 are located outside of the photoelectric layer 113 and are in contact with each other, so that the gap G is surrounded by the inside surfaces 1143b of the two arms 1143 and the base layer 1141, and the free end surfaces 1143a of the two arms 1143 define at least part of the charge track T.

Specifically, each of the two arms 1143 includes an inner corner 1143c and an outer corner 1143d that are respectively arranged on two opposite sides of the free end surface 1143a thereof, and height positions of the inner corners 1143c of the two arms 1143 are different from (e.g., lower than) height positions of the outer corners 1143d of the two arms 1143. In the present embodiment, the inner corners 1143 c of the two arms 1143 are in contact with each other, and the portion of the charge track T formed by the free end surfaces 1143a of the two arms 1143 is substantially V-shaped for facilitating the movement of the target particle P1 along the charge track T. Moreover, since each of the two arms 1143 is provided with the inner corner 1143c and the outer corner 1143d, the charges can be easily concentrated on the inner corners 1143c and the outer corners 1143d.

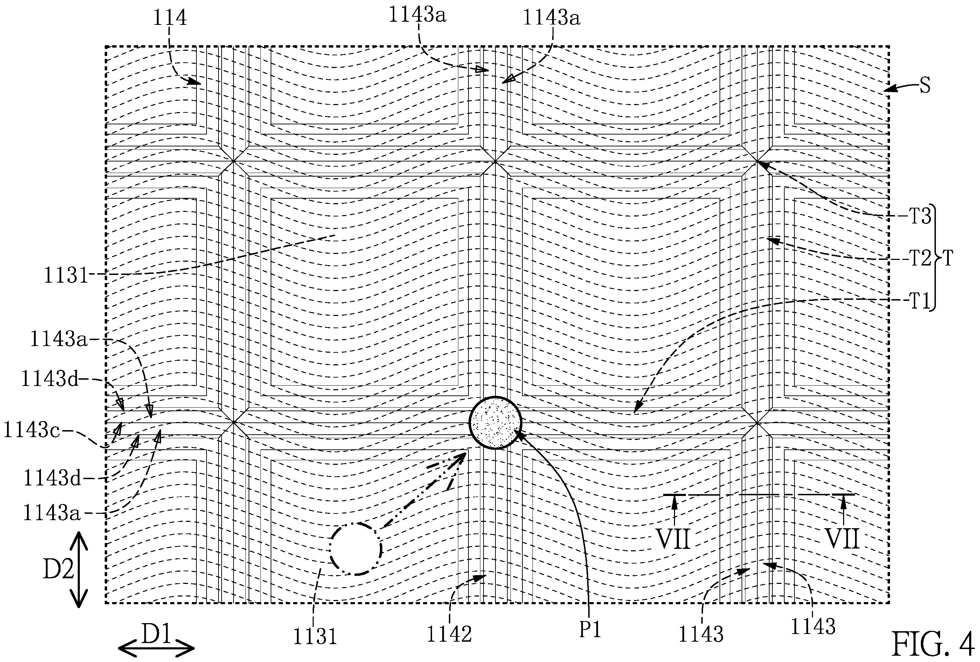

In other words, as shown in FIG. 4 to FIG. 6, the charge track T includes a plurality of transverse track slots T1 and a plurality of longitudinal track slots T2. Each of the transverse track slots T1 is parallel to a first direction D1, and each of the longitudinal track slots T2 is parallel to a second direction D2 and is intersected with the transverse track slots T1 to form a plurality of overlapping regions. In the present embodiment, the first direction D1 and the second direction D2 are perpendicular to each other, but the present invention is not limited thereto.

Specifically, each of the overlapping regions of the transverse track slots T1 and the longitudinal track slots T2 is defined as one of charge concentration regions T3. When the photoelectric layer 113 generates the charges concentrated on the charge track T, a density of each of the charge concentration regions T3 in the light sensing structure 11 is largest, thereby enabling the target particle P1 to be moved and held on any one of the charge concentration regions T3 in the electrostatic adsorption manner.

As shown in FIG. 4 and FIG. 7, any one of the transverse track slots T1 and the longitudinal track slots T2 in the present embodiment is defined by two of the arms 1143. In other words, any one of the transverse track slots T1 and the longitudinal track slots T2 has two of the inner corners 1143c arranged adjacent to each other and two of the outer corners 1143d that are arranged at two opposite outer sides of the two inner corners 1143c. Moreover, in any one of the transverse track slots T1 and the longitudinal track slots T2, height positions of the two inner corners 1143c are different from (e.g., lower than) height positions of the two outer corners 1143d.

Furthermore, as shown in FIG. 4 of the present embodiment, any one of the transverse track slots T1 is one continuous slot along the first direction D1 and are not formed by a plurality of separated segments, and any one of the longitudinal track slots T2 is one continuous slot along the second direction D2 and are not formed by a plurality of separated segments, but the present invention is not limited thereto.

In addition, the particle accommodating device 1 of the present embodiment is provided with the light sensing structure 11 being in cooperation with the mating structure 12 and the bonding layer 13, but the present invention is not limited thereto. For example, in other embodiments of the present invention not shown in the drawings, the light sensing structure 11 can be independently used (e.g., sold) or can be used in cooperation with other structures.

### [Second Embodiment]

Referring to FIG. 9, a second embodiment of the present invention, which is similar to the first embodiment of the present invention, is provided. For the sake of brevity, descriptions of the same components in the first and second embodiments of the present invention will be omitted herein, and the following description only discloses different features between the first and second embodiments.

In the present embodiment, the free end surfaces 1143a of the two arms 1143 are located outside of the photoelectric layer 113 and are arranged away from each other, so that the gap G is in spatial communication with an external space, and the inside surfaces 1143b of the two arms 1143 define at least part of the charge track T.

Specifically, the height positions of the inner corners 1143c of the two arms 1143 are higher than the height positions of the outer corners 1143d of the two arms 1143. In the present embodiment, the inner corners 1143c of the two arms 1143 are arranged away (or spaced apart) from each other, and the portion of the charge track T formed by the inside surfaces 1143b of the two arms 1143 is substantially V-shaped for facilitating the movement of the target particle P1 along the charge track T. In other words, the target particle P1 can be partially located in the gap G.

### [Third Embodiment]

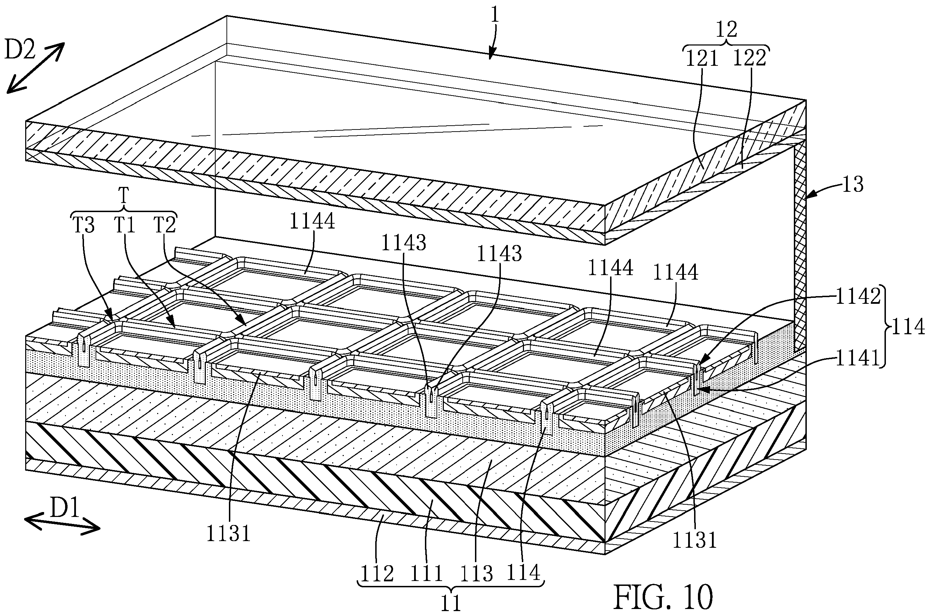

Referring to FIG. 10, a third embodiment of the present invention, which is similar to the first embodiment of the present invention, is provided. For the sake of brevity, descriptions of the same components in the first to third embodiments of the present invention will be omitted herein, and the following description only discloses different features among the first to third embodiments.

In the present embodiment, any one of the transverse track slots T1 is formed by a plurality of separated segments arranged along the first direction D 1, and any one of the longitudinal track slots T2 is formed by a plurality of separated segments arranged along the second direction D2. The structures of transverse track slots T1 and the longitudinal track slots T2 can be adjusted or changed according to practical requirements, and the following description only describes a preferred example, but the present invention is not limited thereto.

Specifically, the track layer 142 includes a plurality of ring-shaped segments 1144 respectively surrounding the transistors 1131. The ring-shaped segments 1144 are arranged adjacent to each other in a matrix arrangement, and top sides of the ring-shaped segments 1144 jointly define the charge track T. In other words, the top sides of the ring-shaped segments 1144 jointly define the transverse track slots T1 and the longitudinal track slots T2.

Moreover, an outer contour of each of the ring-shaped segments 1144 has a square shape or a rectangular shape, and four of the ring-shaped segments 1144 arranged adjacent to each other in a square arrangement or a rectangular arrangement have the charge concentration region T3 on a central portion thereof. In other words, two of the arms 1143 adjacent to each other respectively belong to two of the ring-shaped segments 1144.

### [Beneficial Effects of the Embodiments]

In conclusion, any one of the particle accommodating device, the particle contactless processing apparatus, and the light sensing structure in the present invention is provided with the insulating body formed on the photoelectric layer, such that the charge track of the insulating body can be cooperated with the operation of the photoelectric layer for enabling the target particle to be moved and held onto the charge track in an electrostatic adsorption manner, thereby accurately achieving the positioning of the target particle.

Specifically, the charge track in the present invention is cooperated with the light driving device, so that the target particle can be pushed by the DEP pattern for being quickly moved along the charge track. In other words, the target particle can be moved along the charge track by being continuously pushed or being touched or nudged from the DEP pattern, thereby effectively preventing the target particle from being damaged due to a photomask.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its scope.

## Claims

1. A particle contactless processing apparatus (100), **characterized by** comprising:
a particle accommodating device (1) configured to receive a liquid specimen (S) having a plurality of particles (P) therein, wherein the particle accommodating device (1) includes:
a light sensing structure (11) including a first substrate (111), a first electrode layer (112) formed on the first substrate (111), a photoelectric layer (113) formed on the first substrate (111), and an insulating body (114) that is formed on the photoelectric layer (113) and that includes:
a base layer (1141) embedded in the photoelectric layer (113); and
a track layer (1142) connected to the base layer (1141) and at least partially protruding from the photoelectric layer (113), wherein the track layer (1142) has a charge track (T) arranged on a top side thereof, wherein the photoelectric layer (113) is operable to generate a plurality of charges concentrated on the charge track (T) for enabling at least one of the particles (P) to be moved and held on the charge track (T) in an electrostatic adsorption manner, and wherein the at least one of the particles (P) is defined as a target particle (P1); and
a mating structure (12) spaced apart from the light sensing structure (11), wherein at least one of the mating structure (12) and the light sensing structure (11) is transparent, and the mating structure (12) includes a second substrate (121) and a second electrode layer (122) that is formed on the second substrate (121) and that faces toward the light sensing structure (11); and
a light driving device (3) facing toward the particle accommodating device (1), wherein the light driving device (3) is configured to drive the light sensing structure (11) to form a dielectrophoresis (DEP) pattern (F) by emitting light onto the light sensing structure (11);
wherein, when the target particle (P1) is held on the charge track (T) in the electrostatic adsorption manner, the light driving device (3) is configured to push the target particle (P1) to move along the charge track (T) by moving the DEP pattern (F).

2. The particle contactless processing apparatus (100) according to claim 1, wherein, when the photoelectric layer (113) generates the charges concentrated on the charge track (T), a density of the charges on the charge track (T) is greater than a density of the charges on an outer surface of the photoelectric layer (113).

3. The particle contactless processing apparatus (100) according to claim 1, wherein the photoelectric layer (113) is configured to receive light from an external environment for generating charges on the charge track (T).

4. The particle contactless processing apparatus (100) according to claim 1, wherein the track layer (1142) includes two arms (1143) that extend from the base layer (1141) and that have a gap (G) between inside surfaces (1143b) thereof, and wherein free end surfaces (1143a) of the two arms (1143) are located outside of the photoelectric layer (113) and are in contact with each other, so that the gap (G) is surrounded by the inside surfaces (1143b) of the two arms (1143) and the base layer (1141), and the free end surfaces (1143a) of the two arms (1143) define at least part of the charge track (T).

5. The particle contactless processing apparatus (100) according to claim 1, wherein the track layer (1142) includes two arms (1143) that extend from the base layer (1141) and that have a gap (G) between inside surfaces (1143b) thereof, and wherein free end surfaces (1143a) of the two arms (1143) are located outside of the photoelectric layer (113) and are arranged away from each other, so that the gap (G) is in spatial communication with an external space, and the inside surfaces (1143b) of the two arms (1143) define at least part of the charge track (T).

6. The particle contactless processing apparatus (100) according to claim 1, wherein the charge track (T) includes:
a plurality of transverse track slots (T1) each being parallel to a first direction (D1); and
a plurality of longitudinal track slots (T2) each being parallel to a second direction (D2) and each being intersected with the transverse track slots (T1) to form a plurality of overlapping regions, wherein each of the overlapping regions is defined as one of a plurality of charge concentration regions (T3);
wherein, when the photoelectric layer (113) generates the charges concentrated on the charge track (T), a density of each of the charge concentration regions (T3) in the light sensing structure (11) is largest.

7. The particle contactless processing apparatus (100) according to claim 6, wherein any one of the transverse track slots (T1) and the longitudinal track slots (T2) has two inner corners (1143c) arranged adjacent to each other and two outer corners (1143d) that are arranged at two opposite outer sides of the two inner corners (1143c), and wherein, in any one of the transverse track slots (T1) and the longitudinal track slots (T2), height positions of the two inner corners (1143c) are different from height positions of the two outer corners (1143d).

8. The particle contactless processing apparatus (100) according to claim 1, wherein the photoelectric layer (113) includes a plurality of transistors (1131) in a matrix arrangement, the track layer (1142) includes a plurality of ring-shaped segments (1144) respectively surrounding the transistors (1131), and wherein the ring-shaped segments (1144) are arranged adjacent to each other in a matrix arrangement, and top sides of the ring-shaped segments (1144) jointly define the charge track (T).

9. The particle contactless processing apparatus (100) according to claim 8, wherein an outer contour of each of the ring-shaped segments (1144) has a square shape or a rectangular shape, four of the ring-shaped segments (1144) arranged adjacent to each other in a square arrangement or a rectangular arrangement have a charge concentration region (T3) on a central portion thereof, and wherein, when the photoelectric layer (113) generates the charges concentrated on the charge track (T), a density of each of the charge concentration regions (T3) in the light sensing structure (11) is largest.

10. A particle accommodating device (1) configured to receive a liquid specimen (S) having a plurality of particles (P) therein, the particle accommodating device (1) **characterized by** comprising:
a light sensing structure (11) including:
a first substrate (111);
a first electrode layer (112) formed on the first substrate (111);
a photoelectric layer (113) formed on the first substrate (111); and
an insulating body (114) formed on the photoelectric layer (113) and including a charge track (T) that protrudes from the photoelectric layer (113);
wherein the photoelectric layer (113) is operable to generate a plurality of charges concentrated on the charge track (T), so that a density of the charges on the charge track (T) is greater than a density of the charges on an outer surface of the photoelectric layer (113) for enabling at least one of the particles (P) to be moved and held on the charge track (T) in an electrostatic adsorption manner; and
a mating structure (12) spaced apart from the light sensing structure (11), wherein at least one of the mating structure (12) and the light sensing structure (11) is transparent, and the mating structure (12) includes a second substrate (121) and a second electrode layer (122) that is formed on the second substrate (121) and that faces toward the light sensing structure (11).

11. The particle accommodating device (1) according to claim 10, wherein the insulating body (114) includes:
a base layer (1141) embedded in the photoelectric layer (113); and
a track layer (1142) connected to the base layer (1141) and protruding from the photoelectric layer (113), wherein the track layer (1142) has the charge track (T) arranged on a top side thereof.

12. The particle accommodating device (1) according to claim 10, wherein the charge track (T) includes:
a plurality of transverse track slots (T1) each being parallel to a first direction (D1); and
a plurality of longitudinal track slots (T2) each being parallel to a second direction (D2) and each being intersected with the transverse track slots (T1) to form a plurality of overlapping regions, wherein each of the overlapping regions is defined as one of a plurality of charge concentration regions (T3);
wherein, when the photoelectric layer (113) generates the charges concentrated on the charge track (T), a density of each of the charge concentration regions (T3) in the light sensing structure (11) is largest.

13. The particle accommodating device (1) according to claim 11, wherein the photoelectric layer (113) includes a plurality of transistors (1131) in a matrix arrangement, the track layer (1142) includes a plurality of ring-shaped segments (1144) respectively surrounding the transistors (1131), and wherein the ring-shaped segments (1144) are arranged adjacent to each other in a matrix arrangement, and top sides of the ring-shaped segments (1144) jointly define the charge track (T).

14. A light sensing structure (11) of a particle accommodating device (1), **characterized by** comprising:
a first substrate (111);
a first electrode layer (112) formed on the first substrate (111);
a photoelectric layer (113) formed on the first substrate (111); and
an insulating body (114) formed on the photoelectric layer (113) and including a charge track (T) that protrudes from the photoelectric layer (113);
wherein the photoelectric layer (113) is operable to generate a plurality of charges concentrated on the charge track (T), so that a density of the charges on the charge track (T) is greater than a density of the charges on an outer surface of the photoelectric layer (113).

15. The light sensing structure (11) according to claim 14, wherein the photoelectric layer (113) is configured to receive light from an external environment for generating charges on the charge track (T).
